# EUROPEAN PATENT SPECIFICATION

(11) **EP 0 676 862 B1**
(45) Date of publication and mention of the grant of the patent: **14.11.2001**
(21) Application number: 94929676.8
(22) Date of filing: 18.10.1994
(51) Int. Cl.: H04M 19/00, H01F 27/42

(54) **DIRECT-CURRENT IMPRESSING CIRCUIT**
KONSTANTSTROMQUELLE
CIRCUIT APPLIQUANT UN COURANT CONTINU

(30) Priority: 19.10.1993 JP 26083693; 11.03.1994 JP 198594 U; 10.05.1994 JP 9678094
(43) Date of publication of application: 11.10.1995
(73) Proprietor: TOKYO TSUKI CO., LTD., Tokyo 152 (JP)
(72) Inventor: UMEDA, Kazuhiro, Tokyo 142 (JP); ICHIKAWA, Syuzi, Tokyo 152 (JP)
(74) Representative: Cross, Rupert Edward Blount
(86) International application number: PCT/JP94/01746
(87) International publication number: WO 95/11549

(56) References cited:
- JP-A- 1 093 245
- JP-A- 1 270 403
- JP-A- 2 087 753
- JP-U- 2 084 484
- PATENT ABSTRACTS OF JAPAN vol. 7 no. 103 (E-173) [1248] ,6 May 1983 & JP-A-58 025755 (NIPPON DENKI) 16 February 1983,
- PATENT ABSTRACTS OF JAPAN vol. 13 no. 401 (E-816) ,6 September 1989 & JP-A-01 143528 (TOSHIBA ELECTRIC) 6 June 1989,

## Description

### TECHNICAL FIELD

The present invention relates to a DC application circuit for applying a direct current to a transformer or a choke coil for use in various transmission circuits.

### BACKGROUND ART

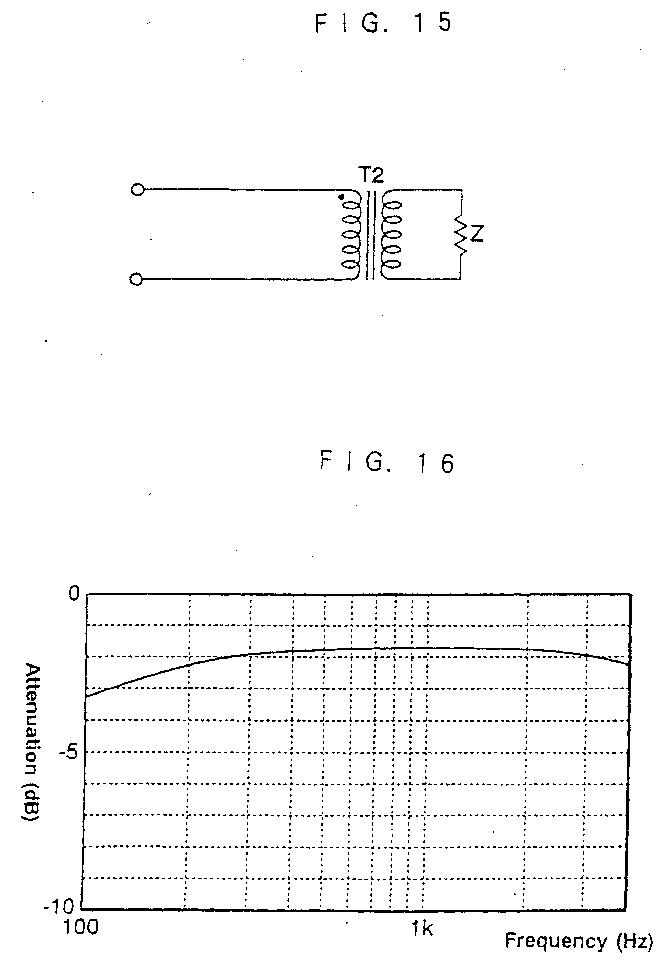

In order to extract AC components from signals containing DC components and AC components, use has been hitherto made of a transformer, for example, as shown in Fig. 14. In this diagram, a choke coil L₁ is connected in parallel to the input side of a transformer T₁ via a direct current isolation capacitor C₁.
Therefore, when this circuit receives DC/AC superimposed signals, only the AC components are applied to the transformer T₁.
However, this configuration entails problems that the choke coil L₁ tends to be large-sized resulting in increased size of the entire circuit or that the use of the choke coil L₁ may lead to raised component costs.

To solve such problems, use as a transformer may be made of a DC applicable transformer T₂, for example, as shown in Fig. 15. The DC applicable-type transformer T₂ includes a large gap in its magnetic path to eliminate the influence of a DC magnetization, thereby allowing application of the DC components.

Disadvantageously, the configuration as shown in Fig. 15 needs to have enlarged external dimensions due to the provision of the gap to eliminate the influence of the DC magnetization. For instance, the number of turns of the transformer T₂ is 1600 turns on both the primary side and the secondary side, with a core size of 35 mm (so-called EI-35). The use of such a large-sized transformer T₂ would result in an attenuation value as low as 3dB at 100 Hz as seen in Fig. 16.

Japanese Patent No. JP-A-1,143,528 shows a circuit for combining an AC signal with a DC signal. A current mirror is used to apply a direct current to both the primary and secondary windings of a transformer. The currents applied to each winding flow in opposite directions with values selected so as to make the core biased magnetization of the transformer zero.

Japanese Patent No. JP-A-58-25,755 shows a circuit including a hybrid transformer having three primary windings. A DC signal applied to the transformer is passed through an additional winding in the opposite direction to the main windings, thus the DC magnetic field is the iron core of the transformer is reduced.

Both of these applications require additional windings to reduce DC magnetization of a magnetic member associated with the transformer.

### SUMMARY OF THE INVENTION

The present invention was conceived to overcome the above problems. It is therefore an object of the present invention to enable a direct current to be applied to a winding of a transformer or a choke coil without increasing the size of a circuit configuration, as well as to improve the characteristics.

In the embodiments of the present invention, DC magnetisation, which may be caused by the DC component of a DC/AC superimposed signal supplied to the winding, is reduced or eliminated by a DC magnetization prevention circuit. Thus, there is no need to provide a gap to compensate for influence of the DC magnetization, which will result in no increase in the external dimensions and no degradation in the characteristics. Additionally, upon the evaluation of the characteristics, the characteristics do not vary largely depending on whether the input is a DC/AC superimposed signal or only an AC signal, thus facilitating the evaluation and testing. The embodiments of the present invention may be widely applied to general transmission circuits.

According to a first aspect of the present invention there is provided a circuit for applying a direct current to a winding comprising a winding for carrying a DC/AC superimposed signal consisting of a DC component and an AC component superimposed on each other, said winding including a centre tap, and a DC magnetization prevention circuit for preventing DC magnetization of a magnetic member associated with said winding due to the DC component flowing therethrough, characterised in that said centre tap is arranged to receive the DC/AC superimposed signal, and in that said DC magnetization prevention circuit controls the flow of the DC component through parts of said winding on opposite sides of said centre tap so that the DC component flows in opposite directions in the two parts.

In the embodiments of this first aspect of the present invention, the DC component flows in opposite directions through the two parts of the winding from the boundary defined by the center tap, whereby the magnetization due to the DC component can be offset by the flow in each part of the winding, accomplishing a preferable prevention of the DC magnetization in the magnetic member.

The embodiments of this aspect of the invention may be implemented by a current mirror circuit having a diode side circuit connected to one end of the winding and a transistor side circuit connected to the other end thereof, and a bypass circuit for bypassing said AC component in said winding around said diode side circuit of said current mirror circuit so that only the DC component is input to the current mirror circuit. Such implementation will allow the DC component of the DC/AC superimposed signal fed to the winding to be led into the current mirror circuit.
Through the bypass circuit, the AC component is bypassed via a part of the winding to the exterior of the current mirror circuit. Accordingly, a part of the winding through which the AC component flows serves its original function for the transformer or the choke coil, while simultaneously the DC component separates from the center tap of the winding into two directions (into the diode side circuit and the transistor side circuit of the current mirror circuit), with the result that the magnetization due to the DC component is offset by the flow in each of the two parts of the winding.

According to a second aspect of the present invention there is provided a circuit for applying a direct current to a winding comprising a winding for carrying a DC/AC superimposed signal consisting of a DC component and an AC component superimposed on each other, and a DC magnetization prevention circuit for preventing DC magnetization of a magnetic member associated with said winding due to the DC component flowing therethrough, said DC magnetization prevention circuit including a current mirror circuit having a diode side circuit and a transistor side circuit, and a bypass circuit providing an AC bypass for the diode side of said current mirror circuit, characterised by a shunt circuit for dividing the input current of the DC/AC superimposed signal into two flows and also for supplying one of them to the diode side circuit of said current mirror circuit and the other to the transistor side circuit thereof, in that said diode side circuit is connected to one end of said winding and said transistor side circuit is connected to the other end thereof, and in that said shunt circuit is arranged such that the direct current flowing to the diode side circuit of the current mirror circuit is sufficiently smaller in value than the direct current flowing to the transistor side circuit thereof such that the DC component to be input to said winding bypasses said winding, thereby reducing the DC component flowing through said winding to such a degree that it can be ignored.

In the embodiments of this aspect of the invention, almost all of the DC component to be input to the winding is bypassed to the exterior of the winding by virtue of the DC magnetization prevention circuit. As a result, the DC component flowing through the winding is reduced to such a degree that it can be ignored, and hence little or no DC magnetization takes place. Thus, without providing the center tap on the winding, the same DC magnetization preventing function as the embodiments of the first aspect of the present invention can be realized.

The DC component of the DC/AC superimposed signal is divided by the shunt circuit into the diode side circuit and the transistor side circuit of the current mirror circuit. At that time, the shunt circuit controls or regulates the flow of the direct current so that the direct current flowing into the diode side circuit of the current mirror circuit is sufficiently smaller in value than the direct current flowing into the transistor side circuit thereof. Therefore, the DC component flowing into the diode side circuit of the current mirror circuit and hence into the winding connected thereto becomes minute. The bypass circuit serves to bypass the diode side circuit of the current mirror circuit for an alternating current. This will allow the characteristics viewed from the input side to coincide with the characteristics of the winding.
Moreover, the shunt circuit can be implemented by the resistors, and the appropriate setting of the values of the resistors will ensure a preferred implementation of the above function. Preferably, the shunt circuit includes a resistor connected to the diode side circuit and a resistor connected to the transistor side circuit of the current mirror circuit, the value of the resistor connected to the diode side circuit being sufficiently large for the value of the resistor connected to the transistor side circuit to be ignored.

According to a third aspect of the present invention there is provided a circuit for applying a direct current to a winding comprising the winding for carrying a DC/AC superimposed signal consisting of a DC component and an AC component superimposed on each other, a DC magnetization prevention circuit for preventing DC magnetization of magnetic member associated with said winding due to the DC component flowing therethrough, characterised in that said DC magnetization prevention circuit includes a transistor connected in parallel to the winding and a biasing circuit connected in series to the winding for biasing said transistor, in that a bypass circuit provides an AC bypass for said biasing circuit, and in that said DC magnetization prevention circuit is arranged such that the DC component to be input to said winding bypasses said winding, thereby reducing the DC component flowing through said winding to such a degree that it can be ignored.

The DC/AC superimposed signal input to the winding is supplied on one hand to the transistor and on the other hand to the winding. The bias circuit connected in series to the winding is alternatingly bypassed by the bypass circuit so that the AC impedance of the transistor has a large value.
Furthermore, the value of the DC component flowing into the biasing circuit via the winding results in a value determined by the current amplification factor of the transistor, and hence in a sufficiently small value compared with the value of the DC component flowing into the transistor. Thus, in this configuration, the DC component flowing into the winding becomes very minute. Preferably, the implementation of the transistor by Darlington connection will ensure a circuit having a greater current driving ability.

The bias circuit may be configured as a bleeder bias circuit consisting of a plurality of resistors connected in series for supplying a bias voltage from a connection point thereof. This will allow the transistor bias circuit to act as a voltage regulator, ensuring a regulated action. Further, by constituting a low-pass filter using the capacitors of the bypass circuit and the resistors of the bleeder biasing circuit, the leakage of the AC component into the transistor can be reduced. Use of this low-pass filter will allow the omission of some of the resistors and reduction in the generation of heat.

In each of the embodiments of the present invention the winding is preferably a primary winding of a transformer or a choke coil. This means that the embodiments of the present invention are applicable to not only the case where the winding is the primary winding of a transformer but also to the case where the winding is a choke coil. In this manner, the embodiments of the present invention have a very wide range of applications.

### BRIEF DESCRIPTION OF DRAWINGS

Fig. 1 is a circuit diagram showing a configuration of a circuit according to the first embodiment of the present invention;
Fig. 2 is a graphical representation showing characteristics of this embodiment;
Fig. 3 is a circuit diagram showing a configuration of a circuit according to the second embodiment of the present invention;
Fig. 4 is a circuit diagram showing a configuration of a circuit according to the third embodiment of the present invention;
Fig. 5 is a circuit diagram showing a configuration of a circuit according to the fourth embodiment of the present invention;
Fig. 6 is a circuit diagram showing a configuration of a circuit according to the fifth embodiment of the present invention;
Fig. 7 is a circuit diagram showing a configuration of a circuit according to the sixth embodiment of the present invention;
Fig. 8 is a circuit diagram showing a configuration of a circuit according to the seventh embodiment of the present invention;
Fig. 9 is a circuit diagram showing a configuration of a circuit according to the eighth embodiment of the present invention;
Fig. 10 is a circuit diagram showing a configuration of a circuit according to the ninth embodiment of the present invention;
Fig. 11 is a circuit diagram showing a configuration of a circuit according to the tenth embodiment of the present invention;
Fig. 12 is a circuit diagram showing a configuration of a circuit according to the eleventh embodiment of the present invention;
Fig. 13 is a circuit diagram showing a configuration of a circuit according to the twelfth embodiment of the present invention;
Fig. 14 is a circuit diagram showing a configuration of a circuit according to the first prior art example;
Fig. 15 is a circuit diagram showing a configuration of a circuit according to the second prior art example; and
Fig. 16 is a graphical representation showing characteristics of this prior art example.

In the diagrams, T₃ and T₄ denote a transformer. A transistor is designated at Q₁ and Q₂, and a capacitor is designated at C₂ to C₄. L₂ and L₃ represent a choke coil, and Z represents a load impedance. It is to be noted in the diagrams that the same elements are indicated by the same reference numerals.

### BEST MODE FOR CARRYING OUT THE INVENTION

A preferred embodiment of the present invention will now be described with reference to the accompanying drawings.

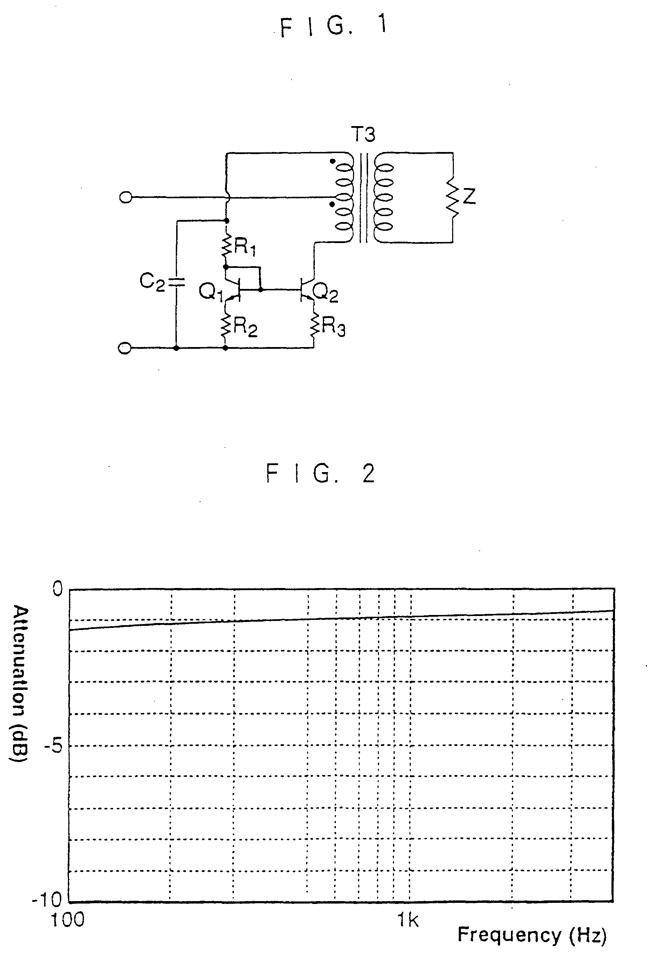

Referring first to Fig. 1, there is shown a configuration of a circuit according to the first embodiment of the present invention. In the shown circuit, use is made of a transformer T₃ with an additional primary winding channel. A DC/AC superimposed signal is provided as an input to a center tap of the transformer T₃.

Through a resistor R₁, one end of a primary winding of the transformer T₃ is connected to a collector of a transistor Q₁. The other end of the primary winding is coupled to a collector of a transistor Q₂. A short circuit is established between a base and the collector of the transistor Q₁ so that the transistor Q₁ functions as a diode. Emitters of the transistors Q₁ and Q₂ are connected to an input terminal via resistors R₂ and R₃, respectively. Bases of the transistors Q₁ and Q₂ are coupled with each other so that a current mirror circuit is made up of the transistors Q₁ and Q₂. In addition, the resistor R₁ is located between the one end of the winding and the transistor Q₁, and a capacitor C₂ bypasses the resistor R₁, transistor Q₁ and resistor R₂.

When the thus configured circuit receives the DC/AC superimposed signal, DC components thereof are led into a current mirror circuit through the primary winding of the transformer T₃. More specifically, a direct current fed from the center tap is led via a part (upper side of the diagram) of the primary winding into the transistor Q₁ of the current mirror circuit, while simultaneously a direct current having the same value as the above (when a mirror ratio is 1) is led via the other part (lower side of the diagram) of the primary winding into the transistor Q₂. In this case no AC components flow into the transistor Q₁ since it is bypassed by the bypass capacitor C₂ due to the presence of the resistor R₁. As a result, DC magnetization of a core or a yoke (not shown) attendant on the supply of the DC components into the primary winding of the transformer T₃ will be canceled because flow of the DC components on one side of the center tap on the primary winding is opposite in direction to that on the other side. Thus, there is no need to provide a gap in the core or the yoke in consideration of the DC magnetization, thereby preventing the transformer T₃ from increasing in size. It is to be appreciated that the lower part in the diagram of the primary winding of the transformer T₃ (the part on the side of the transistor Q₂ of the current mirror circuit) does not function as an original primary winding of the transformer since no AC components flow therethrough. Allowed to function as the original primary winding of the transformer is the upper part in the diagram (the part on the side of the transistor Q₁ of the current mirror).

In order to clarify the effect of this embodiment, comparisons will now be made between this embodiment and the above-described second prior art example according to EI-35 specification. In the case where this embodiment is used for the same application as the thus configured second prior art example, 800 turns in total on the primary side and 400 turns on the secondary side will be sufficient for the number of turns of the transformer T₃, with a core size of 14 mm (so-called EI-14). Furthermore, this circuit can be constituted of general-purpose elements. By way of example, the transistor Q₁ and Q₂ can be transistors such as 2SC1815, manufactuered by the Toshiba Corporation, and the resistors R₁, R₂, and R₃ and the capacitor C₂ can be implemented by elements having general specifications and values such as 150 Ω and 100 µF, respectively.

Moreover, this embodiment ensures remarkably improved characteristics compared with the second prior art example set forth hereinabove. As is seen in Fig. 2, an attenuation value at, for instance, 100Hz results in approximately -1 dB, and attenuation characteristics describe a substantially flat curve from lower frequencies to higher frequencies. In the characteristics of this circuit, there is very little difference between the case of inputting the DC/AC superimposed signal and the case of inputting only the AC components, which will facilitate the valuation and testing of the characteristics.

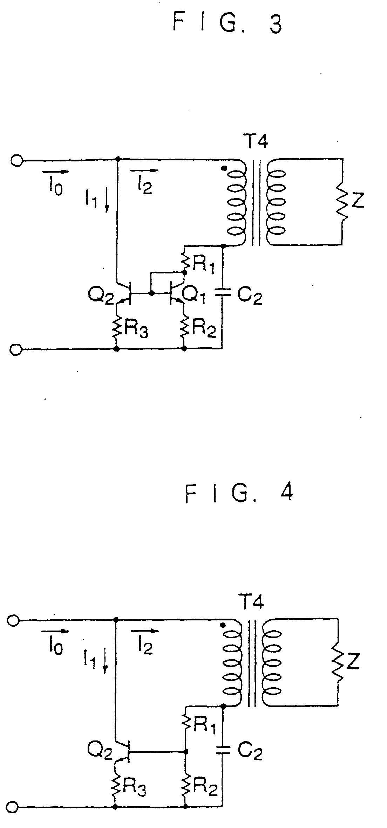

Referring to Fig. 3, there is depicted a configuration of a circuit according to the second embodiment of the present invention. In the shown circuit, use is made of a transformer T₄ reduced in size compared with the conventional transformer, for reasons which will be described later. The DC/AC superimposed signal is input to the transformer T₄ having, for instance, an input impedance of 600 Ω and an output impedance of 600 Ω.

Firstly, this embodiment differs from the first embodiment in the connection of the transformer to the current mirror circuit. More specifically, although the upper and lower terminals of the transformer T₃ were coupled to the diode side and the transistor side, respectively, of the current mirror circuit in the first embodiment, the lower and upper terminals of the transformer T₄ are coupled to the diode side and the transistor side, respectively, in this embodiment. Secondly, this embodiment differs from the first embodiment in that the transformer T₄ used is not provided with the center tap, and that the DC/AC superimposed signal is input to the upper terminal of the transformer T₄.

When the thus configured circuit receives the DC/AC superimposed signal, DC components I₀ thereof are divided into a direct current I₁ to the collector of the transistor Q₂ and DC components I₂ of a primary current to the transformer T₄. The current I₂ is led into the current mirror circuit via the primary winding of the transformer T₄. The current I₂ causes a DC voltage R₂I₂ between ends of the resistor R₂, allowing the same voltage to occur between ends of the resistor R₃. A ratio of the current I₁ to the current I₂ is therefore determined by values of the resistors R₁ to R₃.

For instance, let the resistors R₁ and R₂ be 10 KΩ, and the resistor R₃ be 10 Ω. When a current of 100 mA flows through the resistor R₃, a voltage of 100 mA x 10 Ω = 1V will appear between ends of the resistor R₃. At that time, the ends of the resistor R₂ are also subjected to the same voltage of 1V, and hence the value of the current flowing through the resistor R₂ is 1V / 10 KΩ = 0.1 mA. In other words, when the circuit of this embodiment receives the DC/AC superimposed signal having DC components I₀ = 100 mA, an extremely large direct current (about 100 mA), compared with the direct current of 0.1 mA flowing through the resistor R₂, will flow into the transistor Q₁ and the resistor R₃. This means that almost all of the DC components I₀ of the input signal flow into the transistor Q₂ and the resistor R₃, but a very minute DC current is allowed to flow through the primary winding of the transformer T₄. As a result, the DC magnetization of the core or the yoke which might be otherwise caused by the supply of the DC components into the primary winding of the transformer T₄ can be ignored due to the extremely minute DC components flowing therethrough. This will result in no need to provide a gap in consideration of the DC magnetization, whereby it is possible to prevent the transformer T₄ from increasing in size. In addition, the AC components of the input DC/AC superimposed signal flow into the primary winding of the transformer T₄ since a collector-emitter impedance of the transistor Q₂ is infinite. These AC components are bypassed by the capacitor C₂. Thus, between the input terminals of this circuit, there will appear characteristics of the transformer T₄.

In this embodiment, as long as the number of turns of the transformer t₄ is 400 turns on both the primary side and the secondary side, the core size may be 14 mm (so-called EI-14). Additionally, this circuit can be made up of general-purpose elements. It is to be appreciated that, for instance, the transistor Q₁ and Q₂ can be transistors such as 2SC1815, manufactured by the Toshiba Corporation, and the resistors R₁, R₂, and R₃ and the capacitor C₂ can be implemented by elements having general specifications and values.

In the same manner as the first embodiment, this embodiment also ensures remarkably improved characteristics compared with the second prior art example. That is, the same characteristics as seen in Fig. 2 can be obtained. Also, like the first embodiment, the circuit characteristics hardly vary between the case of inputting the DC/AC superimposed signal and the case of inputting only the AC components.

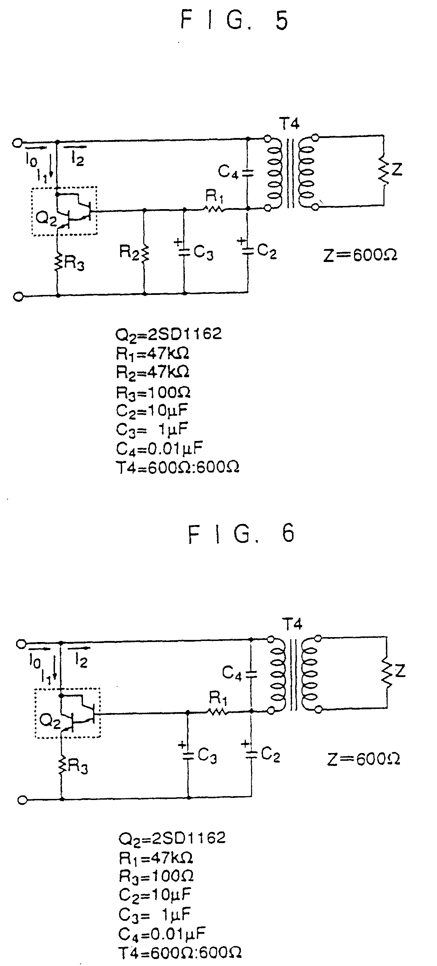

Referring to Fig. 4, there is illustrated a configuration of a circuit according to the third embodiment of the present invention. Also in the shown circuit, use is made of the same transformer T₄ as in the second embodiment.

This embodiment differs from the second embodiment in that it includes a voltage regulator in place of the current mirror circuit. More specifically, with the elimination of the transistor Q₁ having the short-circuited base-collector, a bleeder biasing circuit for the transistor Q₂ is made up of the resistors R₁ and R₂. The resistors R₁ and R₂ are bypassed by the capacitor C₂ in an alternating manner, and hence the biasing by the resistors R₁ and R₂ will result in a DC biasing.
The transistor Q₂ and the biasing circuit (including the resistors R₁ and R₂) constitute the voltage regulator, whereby collector-emitter impedance of the transistor Q₂ results in an alternatingly high impedance. The transistor Q₂ can be 2SC3298, manufactured by the Toshiba Corporation, for instance.

The DC components I₀ of the DC/AC superimposed signal are divided into the direct current I₁ to the collector of the transistor Q₂ and the DC component I₂ of the primary current of the transformer T₄, the current I₂ being led via the primary winding of the transformer T₄ into the biasing circuit. The base of the transistor Q₂ is bleeder-biased by virtue of the current I₂, whereby the base-emitter voltage of the transistor Q₂ results in a constant voltage, to allow the direct current I₁ having a value in accordance with this voltage to flow into the collector of the transistor Q₂. The ratio of the current I₁ to the current I₂ depends on a current amplification factor of the transistor Q₂ and a design of the biasing circuit. Thus, the current I₁ results in an extremely large current compared with the current I₂.

Consequently, in the same manner as the second embodiment, the DC components I₀ of the input signal hardly flow into the primary winding of the transformer T₄. Therefore, similarly, the need to provide a gap in consideration of the DC magnetization is eliminated and the transformer T₄ is prevented from increasing in size.

This embodiment also realizes a transformer T₄ reduced in size to the same degree as the second embodiment, while ensuring characteristics equivalent thereto. In addition, the number of the transistors can be decreased by one, contributing to not only the simplification of the circuit configuration but also the curtailment of the production costs.

Referring to Fig. 5, there is shown a configuration of a DC application circuit according to the fourth embodiment of the present invention. This embodiment differs from the third embodiment in that it employs Darlington connection including a couple of transistors (for instance, 2SD1162s, manufactured by NEC Corporation) as the transistor Q₂. Correspondingly, a capaictor C₄ is provided in parallel with the primary winding of the transformer T₄. A capacitor C₃ is further provided in parallel with the resistor R₂. The Darlington connection of the transistor Q₂ will ensure its increased current drive ability. The addition of the capacitor C₃ allows a low-pass filter to be constituted of the resistor R₁, and the capacitors C₂ and C₃, thereby reducing a leak of the AC components to the transistor Q₂ side.

Referring to Fig. 6, there is depicted a configuration of a DC application circuit according to the fifth embodiment of the present invention. This embodiment differs from the fourth embodiment in that the resistor R₂ is eliminated therefrom. The elimination of the resistor R₂ results in no generation of heat by the resistor R₂, realizing a circuit generating less heat.

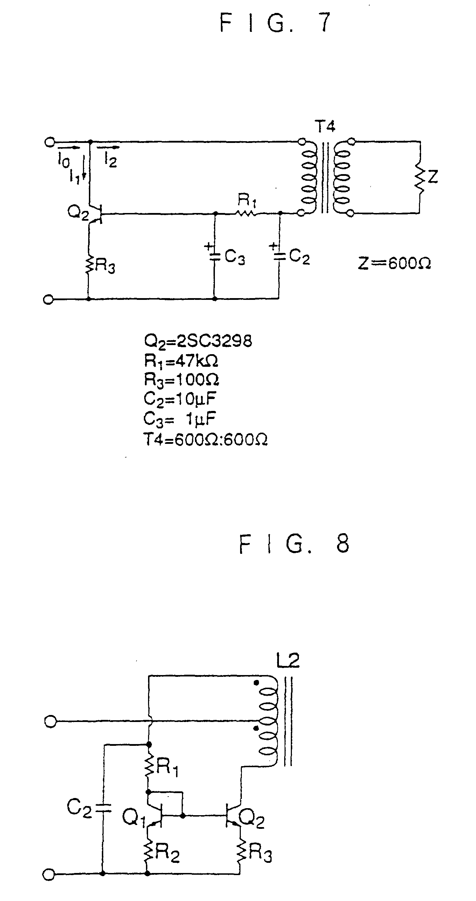

Referring to Fig. 7, there is illustrated a configuration of a DC application circuit according to the sixth embodiment of the present invention. This embodiment differs from the third embodiment in that the capacitor C₃ is provided without the resistor R₂. Elimination of the resistor R₂ realizes a circuit generating less heat, and the addition of the capacitor C₃ ensures a reduction in leak age of the AC components into the transistor Q₂ side.

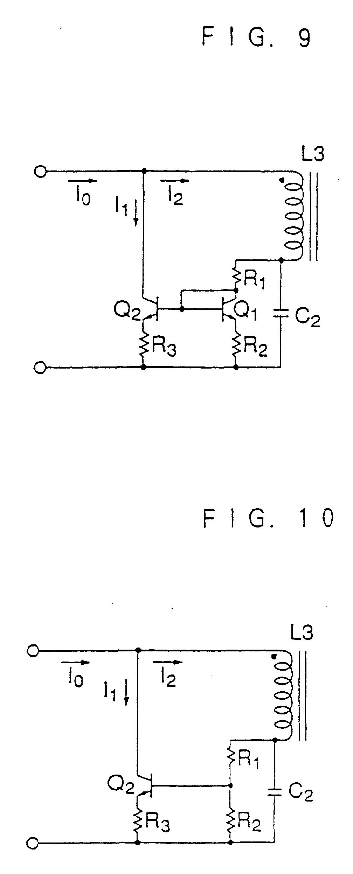

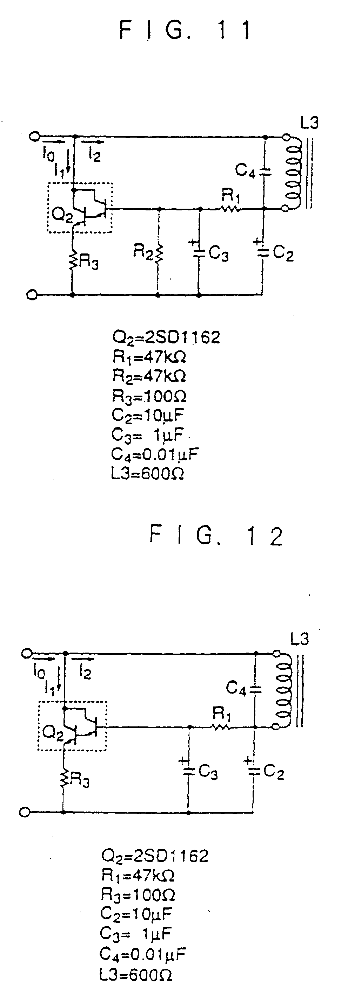

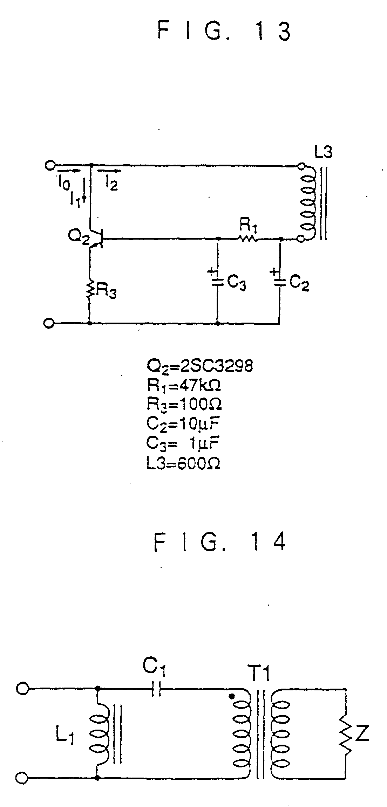

Referring finally to Figs. 8 to 13, there are shown configurations of DC application circuits, respectively, according to the seventh to twelfth embodiment of the present invention. The shown circuits differ from the first to sixth embodiment in that they are a circuit for applying direct current to a choke coil L₂ or L₃. These embodiments also ensure the effects such as reduction in size.

It is to be noted that in the above description the mirror ratio of the current mirror circuit was 1, which is associated with the fact the center tap halves the number of winding in the first and seventh embodiments. However, in the execution of the present invention, mirror ratios other than 1 may be designed. For instance, there may be employed the transistors Q₁ and Q₂ having proper emitter areas, in accordance with the setting of the position of the center tap for the first and seventh embodiments, and so as to allow a minute direct current to flow through the primary winding of the transistor T₄ for the second and eighth embodiments. However, in view of reducing the influence of the DC magnetization as well as providing an inexpensive configuration, it is most preferable to employ the mirror ratio of 1 in the first and seventh embodiments and to employ as large a mirror ratio as possible in the other embodiments using the current mirror circuit. Moreover, the value of the resistor R₁ may be set in accordance with the DC value. Also, the diode-connected transistor Q₁ may be replaced with a diode.

### INDUSTRIAL APPLICABILITY

The present invention is applicable to a facsimile or various other transmission devices. More specifically, the present invention is widely applicable to transformers or inductors for use in a circuit processing a superimposed signal of a DC signal and an AC signal.

## Claims

1. A circuit for applying a direct current to a winding, comprising:
a winding for carrying a DC/AC superimposed signal consisting of a DC component and an AC component superimposed on each other, said winding including a centre tap; and
a DC magnetization prevention circuit for preventing DC magnetization of a magnetic member associated with said winding due to the DC component flowing therethrough; **characterised in that**
said centre tap is arranged to receive the DC/AC superimposed signal; and **in that**
said DC magnetization prevention circuit controls the flow of the DC component through the parts of said winding on opposite sides of said centre tap so that the DC component flows in opposite directions in the two parts.

2. A circuit for applying a direct current to a winding according to Claim 1, wherein
said DC magnetization prevention circuit includes:
a current mirror circuit having a diode side circuit (Q₁) connected to one end of said winding and a transistor side circuit (Q₂) connected to the other end thereof; and
a bypass circuit (C₂) for bypassing said AC component in said winding around said diode side circuit of said current mirror circuit, so that only the DC component is input to the current mirror circuit.

3. A circuit for applying a direct current to a winding, comprising:
a winding for carrying a DC/AC superimposed signal (I₀) consisting of a DC component and an AC component superimposed on each other; and
a DC magnetization prevention circuit for preventing DC magnetization of a magnetic member associated with said winding due to the DC component flowing therethrough, said DC magnetization prevention circuit including:
a current mirror circuit having a diode side circuit (Q₁) and a transistor side circuit (Q₂); and
a bypass circuit (C₂) providing an AC bypass for the diode side (Q₁) of said current mirror circuit; **characterised by**
a shunt circuit for dividing the input current of the DC/AC superimposed signal into two flows (I₁, I₂) and also for supplying one of them (I₂) to the diode side circuit (Q₁) of said current mirror circuit and the other (I₁) to the transistor side circuit (Q₂) thereof; in that said diode side circuit (Q₁) is connected to one end of said winding and said transistor side circuit (Q₂) is connected to the other end thereof; and in that
said shunt circuit is arranged such that the direct current (I₂) flowing to the diode side circuit (Q₁) of the current mirror circuit is sufficiently smaller in value than the direct current (I₁) flowing to the transistor side circuit (Q₂) thereof such that the DC component to be input to said winding bypasses said winding, thereby reducing the DC component flowing through said winding to such a degree that it can be ignored.

4. A circuit for applying a direct current to a winding, according to Claim 3, wherein
said shunt circuit includes a resistor (R₂) connected to the diode side circuit (Q₁) and a resistor (R₃) connected to the transistor side circuit (Q₂) of said current mirror circuit, the value of said resistor (R₂) connected to the diode side circuit (Q₁) being sufficiently large for the value of said resistor (R₃) connected to the transistor side circuit (Q₂) to be ignored.

5. A circuit for applying a direct current to a winding, comprising:
the winding for carrying a DC/AC superimposed signal (I₀) consisting of a DC component and an AC component superimposed on each other;
a DC magnetization prevention circuit for preventing DC magnetization of magnetic member associated with said winding due to the DC component flowing therethrough; **characterised in that**
said DC magnetization prevention circuit includes:
a transistor (Q₂) connected in parallel to the winding; and
a biasing circuit (R₁, R₂) connected in series to the winding for biasing said transistor (Q₂); **in that**
a bypass circuit (C₂) provides an AC bypass for said biasing circuit (R₁, R₂); and **in that**
said DC magnetization prevention circuit is arranged such that the DC component to be input to said winding bypasses said winding, thereby reducing the DC component flowing through said winding to such a degree that it can be ignored;

6. A circuit for applying a direct current to a winding, according to Claim 5, wherein
said biasing circuit comprises a bleeder biasing circuit consisting of a plurality of resistors (R₁, R₂) connected in series for supplying a bias voltage from a connection point thereof.

7. A circuit for applying a direct current to a winding, according to Claim 6, wherein
in co-operation with said resistors (R₁, R₂) constituting said bleeder biasing circuit, said bypass circuit (C₂) constitutes a low-pass filter for reducing leakage of the AC component into the transistor (Q₂) connected in parallel to said winding.

8. A circuit for applying a direct current to a winding, according to Claim 5, wherein
said transistor (Q₂) connected in parallel to said winding is an equivalent transistor obtained by Darlington connection of a plurality of transistors.

9. A circuit for applying a direct current to a winding according to Claim 5, wherein
in co-operation with a capacitor (C₃) constituting said bypass circuit (C₂), said biasing circuit (R₁, R₂) constitutes a low-pass filter for reducing leakage of the AC component into the transistor (Q₂) connected in parallel to said winding.

10. A circuit for applying a direct current to a winding, according to any one of Claim 1, Claim 3 and Claim 5, wherein
said winding is a primary winding of a transformer (T₃, T₄) or a choke coil (L₂, L₃).

## Patentansprüche

1. Schaltung zum Anlegen eines Gleichstroms an eine Wicklung, die umfaßt:
eine Wicklung zum Führen eines überlagerten Gleichstrom/Wechselstrom-Signals, das aus einer Gleichstromkomponente und einer Wechselstromkomponente besteht, die einander überlagert sind, wobei die Wicklung eine Zentralanzapfung enthält; und
eine Gleichstrommagnetisierung-Verhinderungsschaltung zum Verhindern der Gleichstrommagnetisierung eines der Wicklung zugeordneten magnetischen Elements aufgrund der hindurchfließenden Gleichstromkomponente; **dadurch gekennzeichnet, daß**
die Zentralanzapfung so angeordnet ist, daß sie das überlagerte Gleichstrom/Wechselstrom-Signal empfängt; und
die Gleichstrommagnetisierung-Verhinderungsschaltung den Fluß der Gleichstromkomponente durch die Teile der Wicklung auf gegenüberliegenden Seiten der Zentralanzapfung so steuert, daß die Gleichstromkomponente in den zwei Teilen in entgegengesetzten Richtungen fließt.

2. Schaltung zum Anlegen eines Gleichstroms an eine Wicklung nach Anspruch 1, wobei
die Gleichstrommagnetisierung-Verhinderungsschaltung enthält:
eine Stromspiegelschaltung mit einer Diodenseitenschaltung (Q₁), die mit einem Ende der Wicklung verbunden ist, und einer Transistorseitenschaltung (Q₂), die mit deren anderem Ende verbunden ist; und
eine Umgehungsschaltung (C₂) zum Umleiten der Wechselstromkomponente in der Wicklung um die Diodenseitenschaltung der Stromspiegelschaltung, so daß nur die Gleichstromkomponente in die StromspiegelSchaltung eingegeben wird.

3. Schaltung zum Anlegen eines Gleichstroms an eine Wicklung, die umfaßt:
eine Wicklung zum Führen eines überlagerten Gleichstrom/Wechselstrom-Signals (I₀), das aus einer Gleichstromkomponente und einer Wechselstromkomponente besteht, die einander überlagert sind; und
eine Gleichstrommagnetisierung-Verhinderungsschaltung zum Verhindern der Gleichstrommagnetisierung eines der Wicklung zugeordneten magnetischen Elements aufgrund der hindurchfließenden Gleichstromkomponente, wobei die Gleichstrommagnetisierung-Verhinderungsschaltung enthält:
eine Stromspiegelschaltung mit einer Diodenseitenschaltung (Q₁) und einer Transistorseitenschaltung (Q₂); und
eine Umgehungsschaltung (C₂), die eine Wechselstromumleitung für die Diodenseite (Q₁) der Stromspiegelschaltung bereitstellt;
**gekennzeichnet durch**
eine Nebenschlußschaltung zum Aufteilen des Eingangsstroms des überlagerten Gleichstrom/Wechselstrom-Signals in zwei Ströme (I₁, I₂) und ferner zum Zuführen eines derselben (I₂) zur Diodenseitenschaltung (Q₂) der Stromspiegelschaltung und des anderen (I₁) zur Transistorseitenschaltung (Q₂) derselben; wobei die Diodenseitenschaltung (Q₁) mit einem Ende der Wicklung verbunden ist und die Transistorseitenschaltung (Q₂) mit dem anderen Ende derselben verbunden ist; und
die Nebenschlußschaltung so angeordnet ist, daß der zur Diodenseitenschaltung (Q₁) der Stromspiegelschaltung fließende Gleichstrom (I₂) ausreichend kleiner ist als der Gleichstrom (I₁), der zur Transistorseitenschaltung (Q₂) derselben fließt, so daß die in die Wicklung einzugebende Gleichstromkomponente die Wicklung umgeht, wodurch die **durch** die Wicklung fließende Gleichstromkomponente so weit reduziert wird, daß sie vernachlässigt werden kann.

4. Schaltung zum Anlegen eines Gleichstroms an eine Wicklung nach Anspruch 3, wobei
die Nebenschlußschaltung einen Widerstand (R₂), der mit der Diodenseitenschaltung (Q₁) verbunden ist, und einen Widerstand (R₃), der mit der Transistorseitenschaltung (Q₂) der Stromspiegelschaltung verbunden ist, enthält, wobei der Wert des mit der Diodenseitenschaltung (Q₁) verbundenen Widerstands (R₂) ausreichend groß ist, damit der Wert des mit der Transistorseitenschaltung (Q₂) verbundenen Widerstands (R₃) vernachlässigt werden kann.

5. Schaltung zum Anlegen eines Gleichstroms an eine Wicklung, die umfaßt:
eine Wicklung zum Führen eines überlagerten Gleichstrom/Wechselstrom-Signals (I₀), das aus einer Gleichstromkomponente und einer Wechselstromkomponente besteht, die einander überlagert sind;
eine Gleichstrommagnetisierung-Verhinderungsschaltung zum Verhindern der Gleichstrommagnetisierung eines der Wicklung zugeordneten magnetischen Elements aufgrund der hindurchfließenden Gleichstromkomponente; **dadurch gekennzeichnet, daß**
die Gleichstrommagnetisierung-Verhinderungsschaltung enthält:
einen Transistor (Q₂), der parallel zur Wicklung angeschlossen ist; und
eine Vorspannschaltung (R₁, R₂), die in Serie zur Wicklung angeschlossen ist, um den Transistor (Q₂) vorzuspannen, wobei
eine Umgehungsschaltung (C₂) eine Wechselstromumleitung für die Vorspannschaltung (R₁, R₂) bereitstellt; und
die Gleichstrommagnetisierung-Verhinderungsschaltung so angeordnet ist, daß die in die Wicklung einzugebende Gleichstromkomponente die Wicklung umgeht, wodurch die durch die Wicklung fließende Gleichstromkomponente so weit reduziert wird, daß sie vernachlässigt werden kann.

6. Schaltung zum Anlegen eines Gleichstroms an eine Wicklung nach Anspruch 5, wobei
die Vorspannschaltung eine Nebenschlußvorspannschaltung umfaßt, die aus mehreren Widerständen (R₁, R₂) besteht, die in Serie verbunden sind, um eine Vorspannung von einem Verbindungspunkt derselben zuzuführen.

7. Schaltung zum Anlagen eines Gleichstroms an eine Wicklung nach Anspruch 6, wobei
in Kooperation mit den Widerständen (R₁, R₂), die die Nebenschlußvorspannschaltung bilden, die Umgehungsschaltung (C₂) ein Tiefpaßfilter bildet zum Reduzieren des Eindringens der Wechselstromkomponente in den Transistor (Q₂), der parallel zur Wicklung angeschlossen ist.

8. Schaltung zum Anlegen eines Gleichstroms an eine Wicklung nach Anspruch 5, wobei
der Transistor (Q₂), der parallel zur Wicklung angeschlossen ist, ein äquivalenter Transistor ist, der erhalten wird durch eine Darlington-Verbindung mehrerer Transistoren.

9. Schaltung zum Anlegen eines Gleichstroms an eine Wicklung nach Anspruch 5, wobei
in Kooperation mit einem Kondensator (C₃), der die Umgehungsschaltung (C₂) bildet, die Vorspannschaltung (R₁, R₂) ein Tiefpaßfilter bildet zum Reduzieren des Eindringens der Wechselstromkomponente in den Transistor (Q₂), der parallel zur Wicklung angeschlossen ist.

10. Schaltung zum Anlegen eines Gleichstroms an eine Wicklung nach irgendeinern der Ansprüche 1, 3 und 5, wobei
die Wicklung eine Primärwicklung eines Transformators (T₃, T₄) oder einer Drosselspule (L₂, L₃) ist.

## Revendications

1. Circuit pour appliquer un courant continu à un enroulement, comprenant :
un enroulement pour supporter un signal superposé courant continu/courant alternatif comprenant une composante continue et une composante alternative superposées l'une à l'autre, ledit enroulement comportant une prise centrale ; et
un circuit de prévention de magnétisation en courant continu pour empêcher la magnétisation en courant continu d'un élément magnétique associé audit enroulement du fait de la composante continue circulant à travers celui-ci ;
**caractérisé en ce que** :
ladite prise centrale est configurée de façon à recevoir le signal superposé courant continu/courant alternatif ; et **en ce que** :
ledit circuit de prévention de magnétisation en courant continu commande la circulation de la composante continue à travers des parties dudit enroulement sur les côtés opposés de ladite prise centrale de telle sorte que la composante continue circule dans des directions opposées dans les deux parties.

2. Circuit pour appliquer un courant continu à un enroulement selon la revendication 1, dans lequel :
ledit circuit de prévention de magnétisation en courant continu comprend :
un circuit de miroir de courant comportant un circuit du côté de diode (Q₁) connecté à une extrémité dudit enroulement et un circuit du côté de transistor (Q₂) connecté à l'autre extrémité de celui-ci ; et
un circuit de dérivation (C₂) pour faire passer ladite composante alternative dans ledit enroulement autour dudit circuit du côté de diode dudit circuit de miroir de courant, de telle sorte que seule la composante continue soit entrée dans le circuit de miroir de courant.

3. Circuit pour appliquer un courant continu à un enroulement, comprenant :
un enroulement pour supporter un signal superposé courant continu/courant alternatif (I₀) comprenant une composante continue et une composante alternative superposées l'une à l'autre ; et
un circuit de prévention de magnétisation en courant continu pour empêcher la magnétisation en courant continu d'un élément magnétique associé audit enroulement du fait de la composante continue circulant à travers celui-ci, ledit circuit de prévention de magnétisation en courant continu comprenant :
un circuit de miroir de courant comportant un circuit du côté de diode (Q₁) et un circuit du côté de transistor (Q₂) ; et
un circuit de dérivation (C₂) constituant une dérivation en courant alternatif pour le côté de diode (Q₁) dudit circuit de miroir de courant ; **caractérisé par** :
un circuit de shunt pour diviser le courant d'entrée du signal superposé courant continu/courant alternatif en deux courants (I₁, I₂), et également pour délivrer l'un d'entre eux (I₂) au circuit du côté de diode (Q₁) dudit circuit de miroir de courant, et l'autre (I₁) au circuit du côté de transistor (Q₂) de celui-ci ; en ce que ledit circuit du côté de diode (Q₁) est connecté à une extrémité dudit enroulement et en ce que ledit circuit du côté de transistor (Q₂) est connecté à l'autre extrémité de celui-ci ; et en ce que :
ledit circuit de shunt est configuré de telle sorte que le courant continu (I₂) circulant vers le circuit du côté de diode (Q₁) du circuit de miroir de courant a une valeur suffisamment plus faible que le courant continu (I₁) circulant vers le circuit du côté de transistor (Q₂) de celui-ci pour que la composante continue devant être entrée dans ledit enroulement évite ledit enroulement, de façon à réduire par conséquent la composante continue circulant à travers ledit enroulement à un degré tel qu'elle puisse être ignorée.

4. Circuit pour appliquer un courant continu à un enroulement, selon la revendication 3, dans lequel :
ledit circuit de shunt comprend une résistance (R₂) connectée au circuit du côté de diode (Q₁) et une résistance (R₃) connectée au circuit du côté de transistor (Q₂) dudit circuit de miroir de courant, la valeur de ladite résistance (R₂) connectée au circuit du côté de diode (Q₁) étant suffisamment grande pour que la valeur de ladite résistance (R₃) connectée au circuit du côté de transistor (Q₂) soit ignorée.

5. Circuit pour appliquer un courant continu à un enroulement, comprenant :
l'enroulement pour supporter un signal superposé courant continu/courant alternatif (I₀) comprenant une composante continue et une composante alternative superposées l'une à l'autre ;
un circuit de prévention de magnétisation en courant continu pour empêcher la magnétisation en courant continu de l'élément magnétique associé audit enroulement due à la composante continue circulant à travers celui-ci ;
**caractérisé en ce que**
ledit circuit de prévention de magnétisation en courant continu comprend :
un transistor (Q₂) connecté en parallèle avec l'enroulement ; et
un circuit de polarisation (R₁, R₂) connecté en série avec l'enroulement pour polariser ledit transistor (Q₂) ;
**en ce que**
un circuit de dérivation (C₂) constitue une dérivation de courant alternatif pour ledit circuit de polarisation (R₁, R₂) ; et **en ce que**
ledit circuit de prévention de magnétisation en courant continu est configuré de telle sorte que la composante continue devant être entrée dans ledit enroulement évite ledit enroulement, de façon à réduire par conséquent la composante continue circulant à travers ledit enroulement à un degré tel qu'elle puisse être ignorée.

6. Circuit pour appliquer un courant continu à un enroulement, selon la revendication 5, dans lequel
ledit circuit de polarisation comprend un circuit de polarisation à charge stabilisatrice constitué par une pluralité de résistances (R₁, R₂) connectées en série pour délivrer une tension de polarisation à partir d'un point de connexion de celles-ci.

7. Circuit pour appliquer un courant continu à un enroulement, selon la revendication 6, dans lequel
en coopération avec lesdites résistances (R₁, R₂) constituant ledit circuit de polarisation à charge stabilisatrice, ledit circuit de dérivation (C₂) constitue un filtre passe-bas pour réduire les fuites de la composante alternative à l'intérieur du transistor (Q₂) connecté en parallèle audit enroulement.

8. Circuit pour appliquer un courant continu à un enroulement, selon la revendication 5, dans lequel :
ledit transistor (Q₂) connecté en parallèle audit enroulement est un transistor équivalent obtenu par une connexion de Darlington d'une pluralité de transistors.

9. Circuit pour appliquer un courant continu à un enroulement selon la revendication 5, dans lequel :
en coopération avec un condensateur (C₃) constituant ledit circuit de dérivation (C₂), ledit circuit de polarisation (R₁, R₂) constitue un filtre passe-bas pour réduire les fuites de la composante alternative à l'intérieur du transistor (Q₂) connecté en parallèle avec ledit enroulement.

10. Circuit pour appliquer un courant continu à un enroulement, selon l'une quelconque parmi la revendication 1, la revendication 3 et la revendication 5, dans lequel
ledit enroulement est un enroulement primaire d'un transformateur (T₃, T₄) ou d'une bobine d'arrêt (L₂, L₃).
